# EUROPÄISCHE PATENTANMELDUNG

(11) **EP 3 839 858 A1**
(43) Veröffentlichungstag der Anmeldung: **23.06.2021**
(21) Anmeldenummer: 19217165.0
(22) Anmeldetag: 17.12.2019
(51) Int. Cl.: G06Q 20/40, G06Q 20/18, G06Q 20/20, G06K 9/00, G07F 19/00

(54) **SELBSTBEDIENUNGSTERMINAL UND VERFAHREN ZUM BEREITSTELLEN VON SICHERHEIT AN EINEM SELBSTBEDIENUNGSTERMINAL**

(71) Anmelder: Wincor Nixdorf International GmbH, 33106 Paderborn (DE)
(72) Erfinder: WEIS, Eduard, 30102 Paderborn (DE); KNOBLOCH, Alexander, 33100 Paderborn (DE); ENGELNKEMPER, Sebastian, 33449 Langenberg (DE)
(74) Vertreter: Viering, Jentschura & Partner mbB Patent- und Rechtsanwälte

(57) **Zusammenfassung**

Ein Selbstbedienungsterminal (100) und ein Verfahren (600) zum Bereitstellen von Sicherheit an einem Selbstbedienungsterminal werden offenbart, wobei das Selbstbedienungsterminal (100) aufweist: eine Bildgebungsvorrichtung (102), eingerichtet zum Bereitstellen von mindestens einem digitalen Bild (104); mindestens einen Prozessor (110), eingerichtet zum Anwenden eines Gesichtserkennungsverfahrens auf das mindestens eine digitale Bild (104); und zum Steuern des Selbstbedienungsterminals (100) unter Verwendung eines Gesichtserkennungskriteriums abhängig vom Ergebnis des Gesichtserkennungsverfahrens.

## Beschreibung

Verschiedene Ausführungsbeispiele betreffen ein Selbstbedienungsterminal und ein Verfahren zum Bereitstellen von Sicherheit an einem Selbstbedienungsterminal.

An einem Selbstbedienungsterminal, wie beispielsweise einem Bankautomaten, kann ein Benutzer verschiedene Dienstleistungen ohne Interaktion mit einer zusätzlichen Person in Anspruch nehmen. Dabei kann es zu Sicherheitsverstößen während des Benutzens des Selbstbedienungsterminals kommen. Beispielsweise kann eine vermummte/maskierte Person an einem Bankautomaten unter Verwendung einer gestohlenen Bankkarte Geld abheben, oder eine zusätzliche Person kann die durch einen Benutzer eingegebene PIN (persönliche Identifikationsnummer) ausspähen, oder eine zusätzliche Person kann den Benutzer nach Eingabe der PIN wegstoßen oder überwältigen und das Geld aus dem Ausgabefach stehlen/rauben, oder der Benutzer kann das Geld in dem Ausgabefach vergessen und/oder die Bankkarte vergessen und eine zusätzliche Person kann das Geld aus dem Ausgabefach und/oder die Bankkarte an sich nehmen (zum Beispiel kann die zusätzliche Person gezielt darauf warten, dass ein Benutzer Geld und/oder eine Bankkarte vergisst). Daher kann es erforderlich sein, an einem Selbstbedienungsterminal Sicherheit bereitzustellen, beispielsweise einem Benutzer während des Benutzens des Selbstbedienungsterminals Sicherheit zu gewährleisten.

Gemäß verschiedenen Ausführungsformen werden ein Selbstbedienungsterminal und ein Verfahren zum Bereitstellen von Sicherheit an einem Selbstbedienungsterminal bereitgestellt, die imstande sind, Sicherheit an einem Selbstbedienungsterminal bereitzustellen, d.h., die imstande sind, schädliches Verhalten an einem Selbstbedienungsterminal zu verhindern.

Gemäß verschiedenen Ausführungsformen weist ein Selbstbedienungsterminal auf: eine Bildgebungsvorrichtung, eingerichtet zum Bereitstellen von mindestens einem digitalen Bild; mindestens einen Prozessor, eingerichtet zum Anwenden eines Gesichtserkennungsverfahrens auf das mindestens eine digitale Bild; und zum Steuern des Selbstbedienungsterminals unter Verwendung eines Gesichtserkennungskriteriums abhängig vom Ergebnis des Gesichtserkennungsverfahrens.

Das Selbstbedienungsterminal mit den Merkmalen des unabhängigen Anspruchs 1 bildet ein erstes Beispiel.

Die Bildgebungsvorrichtung kann ein oder mehrere Bildgebungssensoren aufweisen, wobei die ein oder mehreren Bildgebungssensoren optional einen Kamera-Sensor und/oder einen Videokamera-Sensor aufweisen können. Die in diesem Absatz beschriebenen Merkmale in Kombination mit dem ersten Beispiel bilden ein zweites Beispiel.

Das Gesichtserkennungsverfahren kann das Ermitteln, ob das mindestens eine digitale Bild ein Gesicht einer ersten Person aufweist, aufweisen. Das Gesichtserkennungsverfahren kann ferner das Extrahieren von biometrischen Merkmalen des Gesichtes aufweisen, falls das mindestens eine digitale Bild das Gesicht der ersten Person aufweist. Die in diesem Absatz beschriebenen Merkmale in Kombination mit dem ersten Beispiel oder dem zweiten Beispiel bilden ein drittes Beispiel.

Das Gesichtserkennungskriterium kann davon abhängig sein, ob ein Gesicht erkannt wurde oder nicht erkannt wurde. Das Gesichtserkennungskriterium kann von den biometrischen Merkmalen des Gesichtes abhängig sein. Anders ausgedrückt kann das Gesichtserkennungskriterium aufweisen, ob in dem mindestens einen digitalen Bild ein Gesicht erkannt wurde oder ob kein Gesicht erkannt wurde und falls ein Gesicht erkannt wurde, kann das Gesichtskriterium von den extrahierten biometrischen Merkmalen abhängig sein, zum Beispiel der Anzahl an extrahierten biometrischen Merkmalen oder ob vordefinierte biometrische Merkmale nicht extrahiert werden konnten. Die in diesem Absatz beschriebenen Merkmale in Kombination mit einem oder mehreren des ersten Beispiels bis dem dritten Beispiel bilden ein viertes Beispiel.

Das Gesichtserkennungskriterium kann, falls das mindestens eine digitale Bild das Gesicht der ersten Person aufweist, aufweisen, ob das Gesicht verdeckt ist. Das in diesem Absatz beschriebene Merkmal in Kombination mit dem dritten Beispiel oder dem vierten Beispiel bildet ein fünftes Beispiel.

Das Gesicht kann verdeckt sein, falls mindestens ein biometrisches Merkmal der biometrischen Merkmale einem Merkmalskriterium nicht genügt. Anschaulich kann beispielsweise ein biometrisches Merkmal der Mundregion des Gesichtes nicht extrahiert werden und der mindestens eine Prozessor kann ermitteln, dass in diesem Fall das Gesicht verdeckt, zum Beispiel maskiert, ist. Das in diesem Absatz beschriebene Merkmal in Kombination mit dem fünften Beispiel bildet ein sechstes Beispiel.

Der mindestens eine Prozessor kann eingerichtet sein zum Steuern des Selbstbedienungsterminals derart, dass das Selbstbedienungsterminal aus einem Standby-Zustand aktiviert wird, falls das Gesicht nicht verdeckt ist. Das hat den Effekt, dass das Selbstbedienungsterminal nur aktiviert wird, falls eine nicht maskierte bzw. nicht vermummte Person das Selbstbedienungsterminal betreiben bzw. bedienen möchte. Das in diesem Absatz beschriebene Merkmal in Kombination mit dem fünften Beispiel oder dem sechsten Beispiel bildet ein siebtes Beispiel.

Der mindestens eine Prozessor kann eingerichtet sein zum Steuern des Selbstbedienungsterminals derart, dass das Selbstbedienungsterminal einen Standby-Zustand beibehält, falls das Gesicht verdeckt ist. Das hat den Effekt, dass das Selbstbedienungsterminal nicht von einer vermummten bzw. maskierten Person, wie beispielsweise einem Dieb, verwendet bzw. betrieben werden kann. Das Selbstbedienungsterminal kann optional ferner eine Anzeigevorrichtung aufweisen, die eingerichtet sein kann, um der dem Gesicht zugeordneten Person eine Information, dass das Gesicht verdeckt ist, bereitzustellen. Die in diesem Absatz beschriebenen Merkmale in Kombination mit einem oder mehreren des fünften Beispiels bis dem siebten Beispiel bilden ein achtes Beispiel.

Das Gesichtserkennungsverfahren kann ermitteln, dass das mindestens eine digitale Bild ein erstes Gesicht einer ersten Person und ferner ein zweites Gesicht einer zweiten Person aufweist und der Prozessor kann eingerichtet sein zum Steuern des Selbstbedienungsterminals unter Verwendung eines ersten Kriteriums und eines zweiten Kriteriums abhängig vom Ergebnis des Gesichtserkennungsverfahrens, wobei das erste Kriterium der ersten Person zugeordnet sein kann und wobei das zweite Kriterium der zweiten Person zugeordnet sein kann. Der mindestens eine Prozessor kann eingerichtet sein, um dem ersten Gesicht der ersten Person zugeordnete erste biometrische Merkmale und/oder dem zweiten Gesicht der zweiten Person zugeordnete zweite biometrische Merkmale zu ermitteln. Das hat den Effekt, dass eine vermummte bzw. maskierte Person in der Nähe des Benutzers erkannt wird und das Selbstbedienungsterminal kann beispielsweise in einen Sicherheitszustand übergehen, zum Beispiel kann in diesem Fall eine Geldausgabe an einem Geldautomaten gestoppt bzw. blockiert werden. Die in diesem Absatz beschriebenen Merkmale in Kombination mit einem oder mehreren des ersten Beispiels bis dem achten Beispiel bilden ein neuntes Beispiel.

Das Selbstbedienungsterminal kann ferner eine Benutzerschnittstelle aufweisen. Die Benutzerschnittstelle kann eine Anzeigevorrichtung aufweisen, die eingerichtet sein kann, um das mindestens eine digitale Bild, das das erste Gesicht der ersten Person und das zweite Gesicht der zweiten Person zeigt, an die erste Person bereitzustellen. Das hat den Effekt, dass ein Benutzer eines Selbstbedienungsterminals auf eine potentielle Bedrohung bzw. einen potentiellen Sicherheitsverstoß hingewiesen werden kann. Die in diesem Absatz beschriebenen Merkmale in Kombination mit dem neunten Beispiel bilden ein zehntes Beispiel.

Der mindestens eine Prozessor kann ferner eingerichtet sein zum Ermitteln eines ersten Abstandes der ersten Person zu dem Selbstbedienungsterminal. Der mindestens eine Prozessor kann ferner eingerichtet sein zum Ermitteln eines zweiten Abstandes der zweiten Person zu dem Selbstbedienungsterminal. Die Anzeigevorrichtung kann eingerichtet sein zum Bereitstellen einer Abstandsinformation an die erste Person unter Verwendung des ersten Abstandes der ersten Person und des zweiten Abstandes der zweiten Person. Das hat beispielsweise den Effekt, dass der Benutzer darauf hingewiesen werden kann, dass ein Diskretionsabstand nicht eingehalten wird. Die in diesem Absatz beschriebenen Merkmale in Kombination mit dem neunten Beispiel oder dem zehnten Beispiel bilden ein elftes Beispiel.

Der mindestens eine Prozessor kann eingerichtet sein, den ersten Abstand der ersten Person unter Verwendung des mindestens einen digitalen Bildes zu ermitteln. Der mindestens eine Prozessor kann eingerichtet sein, den ersten Abstand unter Verwendung eines ersten Augenabstandes der ersten Person zu ermitteln. Der mindestens eine Prozessor kann eingerichtet sein, den ersten Augenabstand unter Verwendung der extrahierten ersten biometrischen Daten zu ermitteln. Der mindestens eine Prozessor kann eingerichtet sein, den zweiten Abstand der zweiten Person unter Verwendung des mindestens einen digitalen Bildes zu ermitteln. Der mindestens eine Prozessor kann eingerichtet sein, den zweiten Abstand unter Verwendung eines zweiten Augenabstandes der zweiten Person zu ermitteln. Der mindestens eine Prozessor kann eingerichtet sein, den zweiten Augenabstand unter Verwendung der extrahierten zweiten biometrischen Daten zu ermitteln. Die in diesem Absatz beschriebenen Merkmale in Kombination mit dem elften Beispiel bilden ein zwölftes Beispiel.

Das Selbstbedienungsterminal kann mindestens einen Abstandssensor aufweisen, der eingerichtet ist zum Detektieren von mindestens einem Abstand einer Person, wobei der mindestens eine Prozessor den ersten Abstand der ersten Person bzw. den zweiten Abstand der zweiten Person unter Verwendung des detektierten Abstandes ermittelt. Die in diesem Absatz beschriebenen Merkmale in Kombination mit dem elften Beispiel bilden ein dreizehntes Beispiel.

Die Bildgebungsvorrichtung kann eingerichtet sein, um ein erstes digitales Bild und ein zweites digitales Bild bereitzustellen, wobei das zweite digitale Bild zeitlich auf das erste digitale Bild folgt. Das Gesichtserkennungsverfahren kann ermitteln, dass das erste digitale Bild ein erstes Gesicht einer ersten Person aufweist und dass das zweite digitale Bild das erste Gesicht der ersten Person nicht aufweist und der mindestens eine Prozessor kann eingerichtet sein zum Steuern des Selbstbedienungsterminals derart, dass das Selbstbedienungsterminal in einen Sicherheitszustand übergeht. Das hat beispielsweise den Effekt, dass, falls ein Benutzer vergisst das Geld aus dem Ausgabefach eines Bankautomaten zu nehmen, das Ausgabefach in dem Sicherheitszustand geschlossen werden kann. Das hat ferner den Effekt, dass, falls ein Benutzer an dem Selbstbedienungsterminal überwältigt und/oder weggestoßen wird, der Angreifer in dem Sicherheitszustand das Selbstbedienungsterminal nicht betreiben kann. Die in diesem Absatz beschriebenen Merkmale in Kombination mit einem oder mehreren des ersten Beispiels bis dem dreizehnten Beispiel bilden ein vierzehntes Beispiel.

Das Selbstbedienungsterminal kann ferner eine Speichervorrichtung aufweisen, die eingerichtet ist, das mindestens eine digitale Bild zu speichern. Das in diesem Absatz beschriebene Merkmal in Kombination mit einem oder mehreren des ersten Beispiels bis dem vierzehnten Beispiel bildet ein fünfzehntes Beispiel.

Die Speichervorrichtung kann einen flüchtigen Speicher zum Speichern des mindestens einen digitalen Bildes aufweisen. Das in diesem Absatz beschriebene Merkmal in Kombination mit dem fünfzehnten Beispiel bildet ein sechzehntes Beispiel.

Die Speichervorrichtung kann ferner eingerichtet sein, das mindestens eine digitale Bild nach Erfüllen eines Abschlusskriteriums zu löschen. Falls biometrische Merkmale für ein Gesicht einer Person extrahiert wurden, kann die Speichervorrichtung ferner eingerichtet sein, die extrahierten biometrischen Merkmale nach Erfüllen des Abschlusskriteriums zu löschen. Das hat den Effekt, dass die persönlichen Daten eines Benutzers nicht dauerhaft, sondern nur während des Betreibens des Selbstbedienungsterminals, gespeichert werden und somit die Anonymität des Benutzers sichergestellt wird. Die in diesem Absatz beschriebenen Merkmale in Kombination mit dem fünfzehnten Beispiel oder dem sechzehnten Beispiel bilden ein siebzehntes Beispiel.

Das Selbstbedienungsterminal kann ein Bankautomat, eine Selbstbedienungskasse oder ein Selbstbedienungskiosk sein. Die in diesem Absatz beschriebenen Merkmale in Kombination mit einem oder mehreren des ersten Beispiels bis dem siebzehnten Beispiel bilden ein achtzehntes Beispiel.

Ein Verfahren zum Bereitstellen von Sicherheit an einem Selbstbedienungsterminal kann aufweisen: Detektieren von mindestens einem digitalen Bild; Anwenden eines Gesichtserkennungsverfahrens auf das mindestens eine digitale Bild; und Steuern des Selbstbedienungsterminals unter Verwendung eines Gesichtserkennungskriteriums abhängig vom Ergebnis des Gesichtserkennungsverfahrens. Das Verfahren mit den in diesem Absatz beschriebenen Merkmalen bildet ein neunzehntes Beispiel.

Das Gesichtserkennungsverfahren kann das Ermitteln, ob das mindestens eine digitale Bild ein Gesicht einer ersten Person aufweist, aufweisen. Das Gesichtserkennungsverfahren kann ferner das Extrahieren von biometrischen Merkmalen des Gesichtes aufweisen, falls das mindestens eine digitale Bild das Gesicht der ersten Person aufweist. Die in diesem Absatz beschriebenen Merkmale in Kombination mit dem neunzehnten Beispiel bilden ein zwanzigstes Beispiel.

Das Gesichtserkennungskriterium kann davon abhängig sein, ob ein Gesicht erkannt wurde oder nicht erkannt wurde. Das Gesichtserkennungskriterium kann von den biometrischen Merkmalen des Gesichtes abhängig sein. Die in diesem Absatz beschriebenen Merkmale in Kombination mit dem zwanzigsten Beispiel bilden ein einundzwanzigstes Beispiel.

Das Gesichtserkennungskriterium kann, falls das mindestens eine digitale Bild das Gesicht der ersten Person aufweist, aufweisen, ob das Gesicht verdeckt ist. Das in diesem Absatz beschriebene Merkmal in Kombination mit dem zwanzigsten Beispiel oder dem einundzwanzigsten Beispiel bildet ein zweiundzwanzigstes Beispiel.

Das Gesicht kann verdeckt sein, falls mindestens ein biometrisches Merkmal der biometrischen Merkmale einem Merkmalskriterium nicht genügt. Das in diesem Absatz beschriebene Merkmal in Kombination mit dem zweiundzwanzigsten Beispiel bildet ein dreiundzwanzigstes Beispiel.

Das Steuern des Selbstbedienungsterminals kann aufweisen: Steuern des Selbstbedienungsterminals derart, dass das Selbstbedienungsterminal aus einem Standby-Zustand aktiviert wird, falls das Gesicht nicht verdeckt ist. Das in diesem Absatz beschriebene Merkmal in Kombination mit dem zweiundzwanzigsten Beispiel oder dem dreiundzwanzigsten Beispiel bildet ein vierundzwanzigstes Beispiel.

Das Steuern des Selbstbedienungsterminals kann aufweisen: Steuern des Selbstbedienungsterminals derart, dass das Selbstbedienungsterminal einen Standby-Zustand beibehält, falls das Gesicht verdeckt ist. Das in diesem Absatz beschriebene Merkmal in Kombination mit einem oder mehreren des zweiundzwanzigsten Beispiels bis dem vierundzwanzigsten Beispiel bildet ein fünfundzwanzigstes Beispiel.

Das Gesichtserkennungsverfahren kann ermitteln, dass das mindestens eine digitale Bild ein erstes Gesicht einer ersten Person und ferner ein zweites Gesicht einer zweiten Person aufweist und das Steuern des Selbstbedienungsterminals kann aufweisen: Steuern des Selbstbedienungsterminals unter Verwendung eines ersten Kriteriums und eines zweiten Kriteriums abhängig vom Ergebnis des Gesichtserkennungsverfahrens, wobei das erste Kriterium der ersten Person zugeordnet sein kann und wobei das zweite Kriterium der zweiten Person zugeordnet sein kann. Das Verfahren kann das Ermitteln von dem ersten Gesicht der ersten Person zugeordneten ersten biometrischen Merkmalen aufweisen. Das Verfahren kann das Ermitteln von dem zweiten Gesicht der zweiten Person zugeordneten zweiten biometrischen Merkmalen aufweisen. Die in diesem Absatz beschriebenen Merkmale in Kombination mit einem oder mehreren des neunzehnten Beispiels bis dem fünfundzwanzigsten Beispiel bilden ein sechsundzwanzigstes Beispiel.

Das Verfahren kann ferner das Bereitstellen des mindestens einen digitalen Bildes, das das erste Gesicht der ersten Person und das zweite Gesicht der zweiten Person zeigt, an die erste Person aufweisen. Die in diesem Absatz beschriebenen Merkmale in Kombination mit dem sechsundzwanzigsten Beispiel bilden ein siebenundzwanzigstes Beispiel.

Das Verfahren kann ferner aufweisen: Ermitteln eines ersten Abstandes der ersten Person zu dem Selbstbedienungsterminal. Der mindestens eine Prozessor kann ferner eingerichtet sein zum Ermitteln eines zweiten Abstandes der zweiten Person zu dem Selbstbedienungsterminal. Das Verfahren kann ferner das Bereitstellen einer Abstandsinformation an die erste Person unter Verwendung des ersten Abstandes der ersten Person und des zweiten Abstandes der zweiten Person aufweisen. Die in diesem Absatz beschriebenen Merkmale in Kombination mit dem sechsundzwanzigsten Beispiel oder dem siebenundzwanzigsten Beispiel bilden ein achtundzwanzigstes Beispiel.

Der erste Abstand der ersten Person kann unter Verwendung des mindestens einen digitalen Bildes ermittelt werden. Der erste Abstand kann unter Verwendung eines ersten Augenabstandes der ersten Person ermittelt werden. Der erste Augenabstand kann unter Verwendung der extrahierten ersten biometrischen Daten ermittelt werden. Der zweite Abstand der zweiten Person kann unter Verwendung des mindestens einen digitalen Bildes ermittelt werden. Der zweite Abstand kann unter Verwendung eines zweiten Augenabstandes der zweiten Person ermittelt werden. Der zweite Augenabstand kann unter Verwendung der extrahierten zweiten biometrischen Daten ermittelt werden. Die in diesem Absatz beschriebenen Merkmale in Kombination mit dem achtundzwanzigsten Beispiel bilden ein neunundzwanzigstes Beispiel.

Der erste Abstand der ersten Person und/oder der zweite Abstand der zweiten Person kann unter Verwendung von mindestens einem Abstandssensor detektiert werden. Die in diesem Absatz beschriebenen Merkmale in Kombination mit dem achtundzwanzigsten Beispiel bilden ein dreißigstes Beispiel.

Das Detektieren von mindestens einem digitalen Bild kann das Detektieren von einem ersten digitalen Bild und einem zweiten digitalen Bild aufweisen, wobei das zweite digitale Bild zeitlich auf das erste digitale Bild folgen kann. Das Gesichtserkennungsverfahren kann ermitteln, dass das erste digitale Bild ein erstes Gesicht einer ersten Person aufweist und dass das zweite digitale Bild das erste Gesicht der ersten Person nicht aufweist und das Steuern des Selbstbedienungsterminals kann aufweisen: Steuern des Selbstbedienungsterminals derart, dass das Selbstbedienungsterminal in einen Sicherheitszustand übergeht. Die in diesem Absatz beschriebenen Merkmale in Kombination mit einem oder mehreren des neunzehnten Beispiels bis dem dreißigsten Beispiel bilden ein einunddreißigstes Beispiel.

Es zeigen
- Figur 1: ein Selbstbedienungsterminal gemäß verschiedenen Ausführungsformen;
- Figur 2: ein Verarbeitungssystem zur Gesichtserkennung gemäß verschiedenen Ausführungsformen;
- Figur 3: ein Verarbeitungssystem gemäß verschiedenen Ausführungsformen;
- Figur 4: ein Verarbeitungssystem gemäß verschiedenen Ausführungsformen;
- Figur 5: ein Verarbeitungssystem gemäß verschiedenen Ausführungsformen;
- Figur 6: ein Verfahren zum Bereitstellen von Sicherheit an einem Selbstbedienungsterminal gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Im Folgenden wird sich auf digitale Bilder und deren Verarbeitung bezogen. Die digitalen Bilder können jede Art von digitalen Bilddaten sein und können ein digitales Abbild der Realität (z.B. des Erfassungsbereichs) zu einem Zeitpunkt des Erfassens der digitalen Bilddaten sein. Die Abbildung der Realität kann beispielsweise mittels eines Objektivs erfolgen, welches Licht auf die Oberfläche eines Bildgebungssensors (z.B. eines Bayer-Sensors) projiziert. Das Erfassen der Bilddaten kann aufweisen, den Bildgebungssensor auszulesen während das Licht auf dessen Oberfläche projiziert wird. Die so erhaltenen Bilddaten können zunächst im sogenannten Rohdatenformat (auch als RAW bezeichnet) sein, welches bildpunktweise die ausgelesenen Messwerte des Bildgebungssensors aufweist und/oder als solche verarbeitet werden. Die Bilddaten können optional beim Verarbeiten in ein anderes Bildformat überführt sein oder werden, z.B. in eine Rastergrafik (verschieden von RAW als Rastergrafik) oder eine Vektorgrafik, so dass deren weitere Verarbeitung in diesem Bildformat erfolgt, oder können beliebig zwischen diesen umgewandelt werden. Das Überführen kann optional aufweisen, die Messwerte des Bildgebungssensors zu interpolieren (z.B. mittels Demosaickings), z.B. um vollständige mehrfarbige Farbinformationen für jeden Bildpunkt von mehreren Bildpunkten zu erhalten oder um weniger Speicherplatz bzw. Rechenleistung zu benötigen. Die Bilddaten können optional komprimiert (z.B. um weniger Speicherplatz bzw. Rechenleistung zu benötigen) oder unkomprimiert (z.B. um Verfälschungen zu vermeiden) sein. Das jeweilige Bildformat kann auch den Farbraum definieren, gemäß dem die Farbinformationen angegeben sind.

Der einfachste Fall ist ein Binär-Farbraum, bei dem pro Bildpunkt ein Schwarzweiß-Wert abgespeichert wird. Bei einem etwas komplexeren Farbraum (auch als Graustufen-Farbraum bezeichnet) werden Zwischenstufen zwischen Schwarz und Weiß abgespeichert (auch als Grauwerte bezeichnet). Der Farbraum kann aber auch von mehreren (z.B. zwei oder mehr) Grundfarben aufgespannt werden, wie beispielsweise rot, grün und blau. Sollen die Messwerte beispielsweise mehrfarbige Farbinformationen aufweisen, kann ein wellenlängensensitiver Bildgebungssensor verwendet werden. Dessen Messwerte können beispielsweise gemäß einem Farbraum kodiert sein. Die Farbinformationen bzw. der zugrundeliegende Farbraum können daher mehrfarbig (auch als polychrom bezeichnet) oder auch einfarbig (auch als monochrom bezeichnet) sein. Die monochrome Farbinformationen kann beispielsweise nur Grauwerte aufweisen (dann auch als Grauwertinformationen bezeichnet) oder Schwarzweiß-Werte aufweisen (dann auch als Schwarzweißwertinformationen bezeichnet), welche die Intensität der erfassten Strahlung bei der Wellenlänge bzw. dem Wellenlängenbereich repräsentieren, bei welcher der monochrome Sensor sensitiv ist. Für eine visuelle Wiedergabe der Bilddaten auf einer Anzeigevorrichtung werden diese in dasjenige Bildformat überführt, das vom Bildspeicher der Grafikkarte vorgegeben ist. Die hierin beschriebenen Bilddaten werden zum einfacheren Verständnis als eine solche visuelle Wiedergabe dargestellt. Im Allgemeinen können die Bilddaten, z.B. abgelegt in einem Speichermedium, als Datei (auch als digitales Bild oder Bilddatei bezeichnet) in dem jeweiligen Bildformat vorliegen.

Den Bilddaten können ferner (z.B. alternativ oder zusätzlich zu den Farbinformationen) Tiefeninformationen (auch als 3D-Informationen bezeichnet) zugeordnet sein. Zum Erfassen der Tiefeninformationen kann eine sogenannte 3D-Kamera verwendet werden. Die Messwerte der 3D-Kamera können (z.B. bildpunktweise) Informationen zu einer Topografie der abgebildeten Realität (auch als Tiefeninformationen bezeichnet) aufweisen. Beispielsweise können die Tiefeninformationen angeben, welchen Abstand ein oder jeder Bildpunkt der Kamera von einem Ort im Raum aufweist, der auf dem Bildpunkt abgebildet wird. Anders ausgedrückt kann ein Abstand eines Objektes bzw. können Abstände mehrerer Objekte unter Verwendung der Tiefeninformationen ermittelt werden. Die Tiefeninformationen können anschaulich den von den Bilddaten abgebildeten zwei räumlichen Dimensionen eine dritte räumliche Dimension (hierin als Tiefe bezeichnet) hinzufügen. Beispielsweise kann ein Objekt mittels der Bilddaten als Projektion auf die zweidimensionale Oberfläche des Bildsensors bzw. des Bildgebungssensors repräsentiert sein (auch als 2D-Bilddaten bezeichnet). Die Tiefeninformationen spannen hierzu die dritte räumliche Dimension auf. Beispielsweise können die Tiefeninformationen den Bilddaten segmentweise (d.h. für jedes Segment der Bilddaten) zugeordnete Werte (auch als Tiefenwerte bezeichnet) aufweisen, welche deren Tiefe angeben. Beispielsweise können die Tiefeninformationen den Bilddaten bildpunktweise (d.h. für jeden Bildpunkt der Bilddaten) zugeordnete Tiefenwerte aufweisen, welche die Tiefe angeben.

Gemäß verschiedenen Ausführungsformen werden die Tiefeninformationen mittels einer dreidimensionalen (3D) Bilderfassung gewonnen. Die Tiefeninformationen können beispielsweise verwendet werden, um zu erkennen, ob sich ein Objekt außerhalb oder hinter (von der Bildgebungsvorrichtung aus betrachtet) einer Referenzebene befindet. Somit kann unterschieden werden, in welchem räumlichen Abstand sich ein Objekt von der Referenzebene befindet. Beispielsweise können die Tiefeninformationen durch den gesamten Erfassungsbereich hindurch gewonnen werden, so dass anschaulich von der Seite her erkannt werden kann, in welcher räumlichen Position sich ein oder mehr als ein Objekt relativ zu der Referenzebene befindet. Die Referenzebene kann beispielsweise entlang der Gravitationsrichtung ausgerichtet sein, wenn eine oder mehr als eine Perspektive der Bilderfassungsvorrichtung quer zu der Gravitationsrichtung verläuft. Allgemeiner gesprochen kann die Referenzebene entlang einer Richtung verlaufen, die quer zu der oder jeder Perspektive der Bildgebungsvorrichtung ist. Beispielsweise kann auch von schräg oben her ein Erfassen der Bilddaten erfolgen.

Gemäß verschiedenen Ausführungsformen kann die Bilderfassungsvorrichtung Bilddaten des Erfassungsbereichs aus mehreren optischen Perspektiven (z.B. mittels mehrerer Objektive bereitgestellt) bereitstellen, welche Tiefeninformationen des Erfassungsbereichs repräsentieren (z.B. stereoskopisch). Zum Ermitteln der Tiefeninformationen können die Bilddaten, welche aus unterschiedlichen Perspektiven (z.B. mittels mehrerer Objektive) erfasst werden, einander überlagert werden, z.B. unter Berücksichtigung einer relativen räumlichen Lage (Position und/oder Ausrichtung) der Objektive zueinander. Eine Kamera kann einen (optischen) Bilderfassungssensor aufweisen und zumindest ein dem Bildgebungssensor zugeordnetes Objektiv (auch als Linsenanordnung bezeichnet). Die Linsenanordnung einer plenoptischen Kamera kann auch ein Gitter aus mehreren Mikrolinsen aufweisen. Beispielsweise kann die Bildgebungsvorrichtung einen RGB-Bildgebungssensor und/oder einen 3D-Bildgebungssensor aufweisen.

Ein Bildgebungssensor (auch als Bildsensor bezeichnet) ist vom Typ des optischen Sensors und kann einen oder mehrere photoelektrisch aktive Bereiche (kann auch als Bildpunkt bezeichnet werden) aufweisen, welche z.B. in Antwort auf eine elektromagnetische Strahlung (z.B. Licht, z.B. sichtbares Licht) ein elektrisches Signal erzeugen und/oder modifizieren. Der Bildgebungssensor kann beispielsweise ein CCD-Sensor (charge-coupled device Sensor) und/oder einen aktiven Bildpunktsensor bzw. aktiven Pixelsensor (kann auch als CMOS-Sensor bezeichnet werden) aufweisen oder daraus gebildet sein. Optional kann ein Bildgebungssensor wellenlängensensitiv eingerichtet sein (z.B. zum Erfassen von Farbinformationen), z.B. mittels mehrerer Farbfilter (z.B. in Gitterform), und so zwischen verschiedenen Wellenlängen unterscheiden.

Die Tiefeninformationen können quantifiziert sein, z.B. unter Angabe der Tiefe als Wert (auch als Tiefenwert bezeichnet), kodiert sein oder selbst mittels Bilddaten bereitgestellt sein, z.B. indem aus einer anderen Perspektive gleichzeitig erfasste Bilddaten (z.B. separat voneinander oder einander überlagert) zugeordnet werden. Die mehreren gleichzeitig erfassten Perspektiven können beispielsweise einander überlagert werden, um die Tiefeninformationen zu quantifizieren. Jeder Tiefenwert der Tiefeninformationen kann dann beispielsweise zu einer Abweichung zwischen den mehreren gleichzeitig erfassten Perspektiven korrespondieren.

Verschiedene Ausführungsformen betreffen ein Selbstbedienungsterminal und ein Verfahren zum Bereitstellen von Sicherheit an einem Selbstbedienungsterminal. Es kann erforderlich sein, schädliches Verhalten, wie beispielsweise Betrug, Diebstahl etc., an einem Selbstbedienungsterminal zu verhindern. Anschaulich werden ein Selbstbedienungsterminal und ein Verfahren bereitgestellt, die imstande sind, einem Benutzer während des Benutzens eines Selbstbedienungsterminals Sicherheit bereitzustellen sowie schädliches Verhalten an einem Selbstbedienungsterminal zu verhindern.

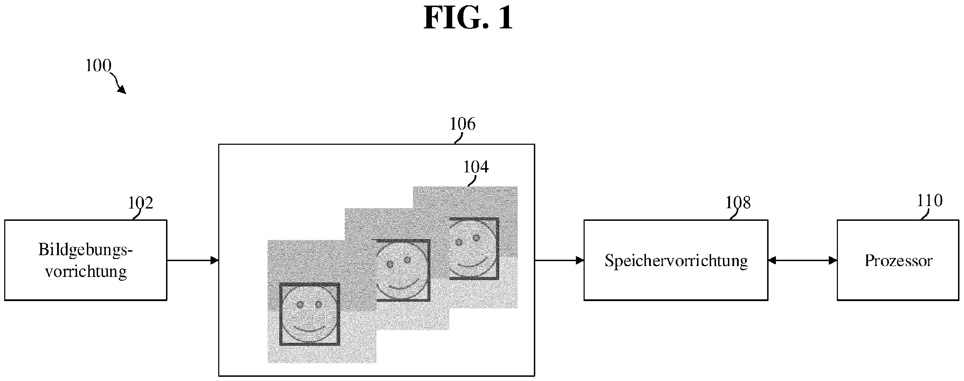

**FIG. 1** stellt ein Selbstbedienungsterminal 100 gemäß verschiedenen Ausführungsformen dar. Das Selbstbedienungsterminal 100 kann ein Bankautomat (ein Geldautomat), eine Selbstbedienungskasse oder ein Selbstbedienungskiosk sein. Das Selbstbedienungsterminal 100 kann eine Bildgebungsvorrichtung 102 aufweisen. Die Bildgebungsvorrichtung 102 kann eingerichtet sein, um mindestens ein digitales Bild 104 bereitzustellen, beispielsweise um mehrere digitale Bilder 106 bereitzustellen. Die Bildgebungsvorrichtung 102 kann ein oder mehrere Sensoren aufweisen. Die ein oder mehreren Sensoren können eingerichtet sein, um digitale Daten bereitzustellen. Die Bildgebungsvorrichtung 102 kann eingerichtet sein, um unter Verwendung der bereitgestellten digitalen Daten das mindestens eine digitale Bild 104 bzw. die mehreren digitalen Bilder 106 bereitzustellen. Gemäß verschiedenen Ausführungsformen weisen die digitalen Daten digitale Bilddaten auf. Die ein oder mehreren Sensoren können Bildgebungssensoren, wie beispielsweise ein Kamera-Sensor oder ein Video-Sensor, sein. Die Sensoren der mehreren Sensoren können die gleiche Art oder verschiedene Arten von Sensoren aufweisen. Die Bildgebungsvorrichtung 102 kann eingerichtet sein, um die digitalen Daten bzw. das mindestens eine digitale Bild 104 in Reaktion auf ein Ereignis zu detektieren. Das Selbstbedienungsterminal kann beispielsweise ein oder mehrere Bewegungssensoren aufweisen und das auslösende Ereignis kann eine mittels der ein oder mehreren Bewegungssensoren detektierte Bewegung sein.

Das Selbstbedienungsterminal 100 kann eine Benutzerschnittstelle aufweisen, die eingerichtet ist, einer Person, wie beispielsweise einem Benutzer, eine Bedienung (beispielsweise mittels einer Eingabevorrichtung der Benutzerschnittstelle) des Selbstbedienungsterminals 100 zu ermöglichen. Das die Detektion des mindestens einen digitalen Bildes 104 auslösende Ereignis kann ein durch den Benutzer ausgelöstes Ereignis, wie beispielsweise eine PIN-Eingabe an einem Bankautomaten, eine Auswahl an einem Selbstbedienungskiosk, das Auswählen bzw. Eingeben eines Produktes an einer Selbstbedienungskasse etc., sein.

Das Selbstbedienungsterminal 100 kann ferner eine Speichervorrichtung 108 aufweisen. Die Speichervorrichtung 108 kann zumindest einen Speicher aufweisen. Der Speicher kann beispielsweise bei der durch einen Prozessor durchgeführten Verarbeitung verwendet werden. Ein in den Ausführungsformen verwendeter Speicher kann ein flüchtiger Speicher, zum Beispiel ein DRAM (dynamischer Direktzugriffsspeicher), oder ein nichtflüchtiger Speicher, zum Beispiel ein PROM (programmierbarer Festwertspeicher), ein EPROM (löschbarer PROM), ein EEPROM (elektrisch löschbarer PROM) oder ein Flash-Speicher, wie beispielsweise eine Speichereinrichtung mit schwebendem Gate, eine ladungsabfangende Speichereinrichtung, ein MRAM (magnetoresistiver Direktzugriffsspeicher) oder ein PCRAM (Phasenwechsel-Direktzugriffsspeicher), sein. Die Speichervorrichtung 108 kann eingerichtet sein, um digitale Bilder, wie beispielsweise das mindestens eine digitale Bild 104 bzw. die mehreren digitalen Bilder 106, zu speichern.

Das Selbstbedienungsterminal 100 kann ferner mindestens einen Prozessor 110 aufweisen. Der mindestens eine Prozessor 110 kann, wie oben beschrieben, jede Art von Schaltung, d.h. jede Art von Logik-implementierender Entität, sein. Der Prozessor 110 kann eingerichtet sein, um das mindestens eine digitale Bild 104 bzw. die mehreren digitalen Bilder 106 zu verarbeiten.

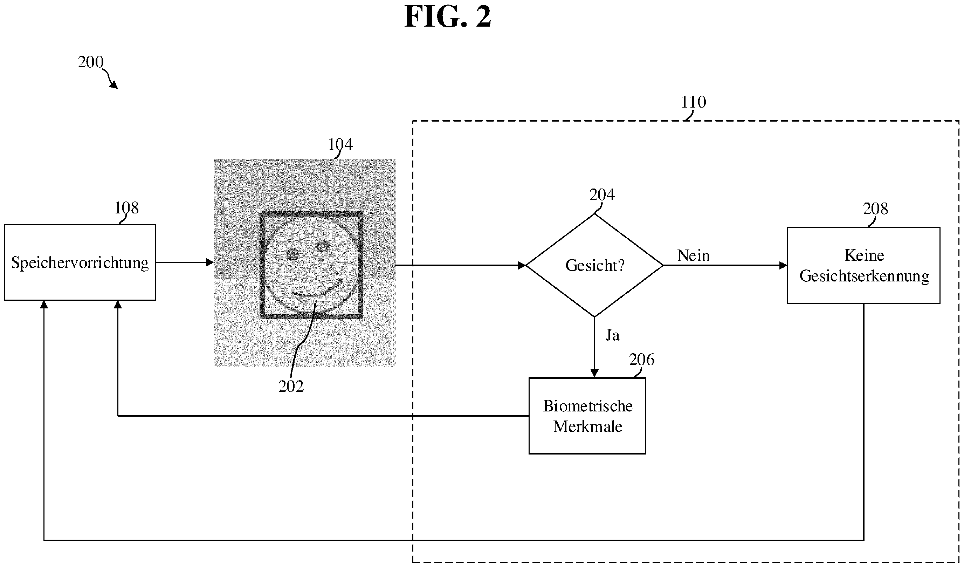

**FIG. 2** stellt ein Verarbeitungssystem zur Gesichtserkennung 200 gemäß verschiedenen Ausführungsformen dar. Das Verarbeitungssystem zur Gesichtserkennung 200 kann die Speichervorrichtung 108 aufweisen. Die Speichervorrichtung 108 kann eingerichtet sein, um digitale Bilder, wie beispielsweise das digitale Bild 104 bzw. die mehreren digitalen Bilder 106 zu speichern, zum Beispiel flüchtig zu speichern, zum Beispiel nichtflüchtig zu speichern. Das Verarbeitungssystem zur Gesichtserkennung 200 kann ferner den mindestens einen Prozessor 110 aufweisen. Die Speichervorrichtung 108 kann eingerichtet sein, um dem Prozessor 110 das mindestens eine digitale Bild 104 bereitzustellen und der Prozessor 110 kann eingerichtet sein, um das mindestens eine digitale Bild 104 zu verarbeiten.

Das mindestens eine digitale Bild 104 kann ein Gesicht 202 einer Person aufweisen. Der Prozessor 110 kann eingerichtet sein, um ein Gesichtserkennungsverfahren auf das mindestens eine digitale Bild 104 anzuwenden. Das Gesichtserkennungsverfahren kann aufweisen: Ermitteln 204, ob das mindestens eine digitale Bild 104 ein Gesicht 202 einer Person aufweist. Das Ermitteln 204, ob das mindestens eine digitale Bild 104 ein Gesicht 202 einer Person aufweist, kann das Verwenden eines Gesichtserkennungsalgorithmus aufweisen. Der Gesichtserkennungsalgorithmus kann zum Beispiel ein neuronales Netzwerk sein. Das Gesichtserkennungsverfahren kann ein biometrisches Gesichtserkennungsverfahren sein. Das Gesichtserkennungsverfahren kann ein zweidimensionales Gesichtserkennungsverfahren oder ein dreidimensionales Gesichtserkennungsverfahren sein. Der Prozessor 110 kann ferner eingerichtet sein, um, falls das mindestens eine digitale Bild 104 das Gesicht 202 der Person aufweist ("Ja" in FIG. 2), biometrische Merkmale 206 des Gesichtes 202 zu ermitteln bzw. zu extrahieren. Gemäß verschiedenen Ausführungsformen ist das Gesichtserkennungsverfahren ein biometrisches Gesichtserkennungsverfahren, das die biometrischen Merkmale 206 des erkannten Gesichtes 202 bereitstellt. Die Speichervorrichtung 108 kann eingerichtet sein, um die biometrischen Merkmale 206 des Gesichtes 202 zu speichern.

Der Prozessor 110 kann ferner eingerichtet sein, um, falls das mindestens eine digitale Bild 104 kein Gesicht einer Person aufweist ("Nein" in FIG. 2), eine erste Information 208, dass kein Gesicht erkannt wurde, bereitzustellen und die Speichervorrichtung 108 kann eingerichtet sein, um die erste Information 208, dass kein Gesicht erkannt wurde, zu speichern.

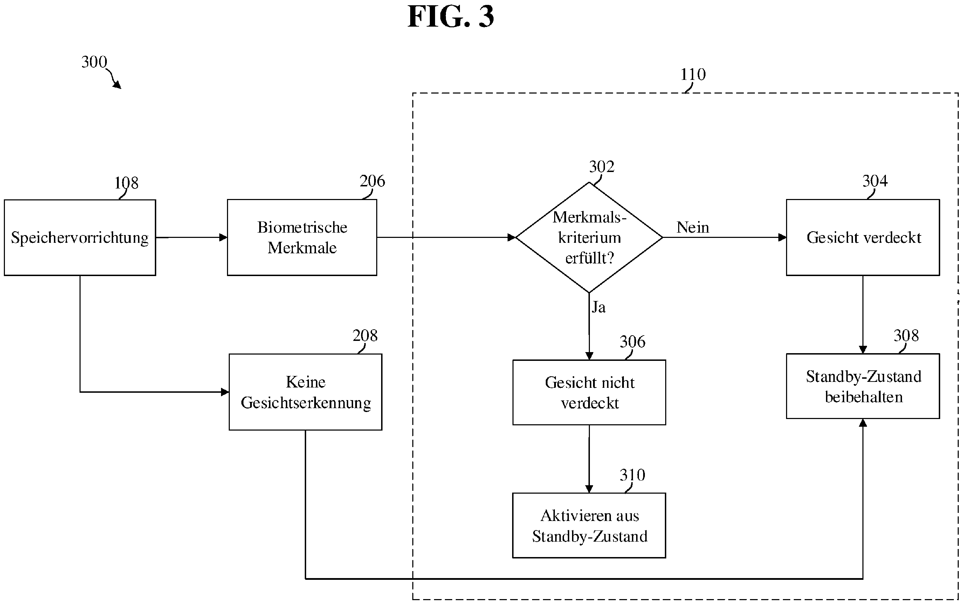

**FIG. 3** stellt ein Verarbeitungssystem 300 gemäß verschiedenen Ausführungsformen dar. Das Verarbeitungssystem 300 kann die Speichervorrichtung 108 aufweisen. Die Speichervorrichtung 108 kann eingerichtet sein, um die biometrischen Merkmale 206 des Gesichtes 202 der Person zu speichern. Das Verarbeitungssystem 300 kann ferner den mindestens einen Prozessor 110 aufweisen. Der mindestens eine Prozessor 110 kann eingerichtet sein, um die biometrischen Merkmale 206 des Gesichtes 202 zu verarbeiten. Der Prozessor 110 kann eingerichtet sein, um zu ermitteln 302, ob ein Merkmalskriterium der biometrischen Merkmale 206 erfüllt ist. Das Merkmalskriterium kann beispielsweise eine erforderliche Anzahl an erkannten biometrischen Merkmalen aufweisen und/oder kann das Vorhandensein von biometrischen Merkmalen (zum Beispiel das Vorhandensein biometrischer Merkmale des Mundbereiches des Gesichtes) aufweisen. Der Prozessor 110 kann eingerichtet sein, um, falls das Merkmalskriterium der biometrischen Merkmale 206 nicht erfüllt ist ("Nein" in FIG. 3), eine zweite Information 304, dass das Gesicht 202 der Person verdeckt ist, zu ermitteln. Das Gesicht 202 kann beispielsweise durch eine Maske verdeckt sein. Das heißt, die dem Gesicht 202 zugeordnete Person kann vermummt sein. Der Prozessor 110 kann eingerichtet sein, um, falls das Merkmalskriterium der biometrischen Merkmale 206 erfüllt ist ("Ja" in FIG. 3), eine dritte Information 306, dass das Gesicht 202 der Person nicht verdeckt ist, zu ermitteln.

Ein Gesichtserkennungskriterium kann die erste Information 208, dass kein Gesicht erkannt wurde, die zweite Information 304, dass das Gesicht 202 verdeckt ist, oder die dritte Information 306, dass das Gesicht 202 nicht verdeckt ist, aufweisen. Der Prozessor 110 kann eingerichtet sein, um unter Verwendung des Gesichtserkennungskriteriums abhängig vom Ergebnis des Gesichtserkennungsverfahrens das Selbstbedienungsterminal 100 zu steuern. Das heißt, der Prozessor 110 kann eingerichtet sein, um das Selbstbedienungsterminal unter Verwendung der ersten Information 208, dass kein Gesicht erkannt wurde, unter Verwendung der zweiten Information 304, dass das Gesicht 202 verdeckt ist, oder unter Verwendung der dritten Information 306, dass das Gesicht 202 nicht verdeckt ist, zu steuern. Das Selbstbedienungsterminal 100 kann beispielsweise in einem Standby-Zustand (einen Bereitschaftsbetriebszustand) sein. Der Prozessor 110 kann eingerichtet sein, um den Standby-Zustand 308 beizubehalten, unter Verwendung der ersten Information 208, dass kein Gesicht erkannt wurde. Anders ausgedrückt kann der Prozessor 110 eingerichtet sein, den Standby-Zustand 308 beizubehalten, falls kein Gesicht erkannt wurde. Der Prozessor 110 kann eingerichtet sein, um den Standby-Zustand 308 beizubehalten, unter Verwendung der zweiten Information 304, dass das Gesicht 202 verdeckt ist. Anders ausgedrückt kann der Prozessor 110 eingerichtet sein, den Standby-Zustand 308 beizubehalten, falls das Gesicht 202 verdeckt ist. Gemäß verschiedenen Ausführungsformen weist das Selbstbedienungsterminal 100 ferner eine Benutzerschnittstelle auf. Die Benutzerschnittstelle kann eine Anzeigevorrichtung aufweisen, die eingerichtet sein kann, um der Person (zum Beispiel dem Benutzer des Selbstbedienungsterminals 100), d.h. der Person, der das Gesicht 202 zugeordnet ist, Informationen bezüglich der Gesichtserkennung (d.h., dem Ergebnis des Gesichtserkennungsverfahrens) bereitzustellen. Die Anzeigevorrichtung kann eingerichtet sein, um der Person die zweite Information 304, dass das Gesicht 202 verdeckt ist, bereitzustellen. Beispielsweise kann die Anzeigevorrichtung einen Bildschirm aufweisen und kann die Information bezüglich der Gesichtserkennung auf dem Bildschirm, zum Beispiel in Textform, anzeigen. Die angezeigte Information kann beispielsweise eine Anweisung aufweisen, die angibt, dass die Person das Gesicht 202 preisgeben, d.h. aufdecken bzw. zeigen, soll.

Der Prozessor 110 kann eingerichtet sein, um unter Verwendung der dritten Information 306, dass das Gesicht 202 nicht verdeckt ist, das Selbstbedienungsterminal 100 zu steuern. Der Prozessor 110 kann eingerichtet sein, zum Aktivieren 310 des Selbstbedienungsterminals 100, zum Beispiel zum Aktivieren 310 aus dem Standby-Zustand 308, falls das Gesicht 202 nicht verdeckt ist (dritte Information 306).

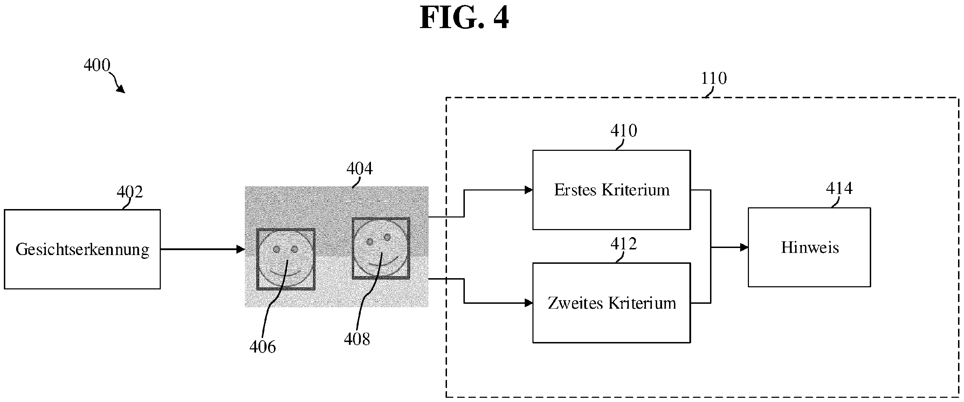

**FIG. 4** stellt ein Verarbeitungssystem 400 gemäß verschiedenen Ausführungsformen dar. Das Verarbeitungssystem 400 kann eine Gesichtserkennung 402 aufweisen. Die Gesichtserkennung 402 kann im Wesentlichen dem Verarbeitungssystem zur Gesichtserkennung 200 entsprechen, wobei die Gesichtserkennung 402 mindestens ein digitales Bild 404, das mehr als ein Gesicht aufweisen kann, verarbeiten kann. Das mindestens eine digitale Bild 404 kann ein erstes Gesicht 406 einer ersten Person und ein zweites Gesicht 408 einer zweiten Person aufweisen und die Gesichtserkennung 402 kann eingerichtet sein, das erste Gesicht 406 der ersten Person und das zweite Gesicht 408 der zweiten Person in dem mindestens einen digitalen Bild 404 zu ermitteln bzw. zu erkennen. Die Gesichtserkennung 402 kann ferner eingerichtet sein, um die biometrischen Merkmale des ersten Gesichtes 406 und/oder die biometrischen Merkmale des zweiten Gesichtes 408 zu ermitteln bzw. zu extrahieren. Der mindestens eine Prozessor 110 kann eingerichtet sein, um zu ermitteln, ob ein erstes Kriterium 410 erfüllt ist. Das erste Kriterium 410 kann dem ersten Gesicht 406 der ersten Person zugeordnet sein. Der Prozessor 110 kann eingerichtet sein, um zu ermitteln, ob ein zweites Kriterium 412 erfüllt ist. Das zweite Kriterium 412 kann dem zweiten Gesicht 408 der zweiten Person zugeordnet sein. Das erste Kriterium 410 und/oder das zweite Kriterium 412 können jeweils ein Gesichtserkennungskriterium sein, wobei das Gesichtserkennungskriterium, wie oben beschrieben, eine Information, ob ein Gesicht verdeckt ist, oder eine Information, ob ein Gesicht nicht verdeckt ist, aufweisen kann. Der Prozessor 110 kann eingerichtet sein, um einen ersten Abstand der ersten Person zu dem Selbstbedienungsterminal 100 zu ermitteln und kann ferner eingerichtet sein, um einen zweiten Abstand der zweiten Person zu dem Selbstbedienungsterminal 100 zu ermitteln. Der Prozessor 110 kann eingerichtet sein, um den ersten Abstand und/oder den zweiten Abstand unter Verwendung des mindestens einen digitalen Bildes 404 zu ermitteln. Der Prozessor 110 kann eingerichtet sein, um unter Verwendung der biometrischen Merkmale des ersten Gesichtes 406 einen ersten Augenabstand zu ermitteln und kann ferner eingerichtet sein, um den ersten Abstand der ersten Person unter Verwendung des ermittelten ersten Augenabstandes zu ermitteln. Der Prozessor 110 kann eingerichtet sein, um unter Verwendung der biometrischen Merkmale des zweiten Gesichtes 408 einen zweiten Augenabstand zu ermitteln und kann ferner eingerichtet sein, um den zweiten Abstand der zweiten Person unter Verwendung des ermittelten zweiten Augenabstandes zu ermitteln.

Gemäß verschiedenen Ausführungsformen weist das Selbstbedienungsterminal 100 ferner mindestens einen Abstandssensor, zum Beispiel mehrere Abstandssensoren, auf. Der mindestens eine Abstandssensor kann jede Art von Sensor sein, der imstande ist, Daten bereitzustellen, mithilfe welcher ein Abstand ermittelt werden kann. Der mindestens eine Abstandssensor kann beispielsweise eine Stereo-Kamera sein. Der mindestens eine Abstandssensor kann ein Fernortungssensor, wie beispielsweise ein Radar-Sensor, ein LIDAR-Sensor oder ein Ultraschall-Sensor, sein.
Die Abstandssensoren der mehreren Abstandssensoren können die gleiche Art oder verschiedene Arten von Abstandssensoren aufweisen. Der mindestens eine Abstandssensor kann eingerichtet sein, um Abstandsdaten bereitzustellen und der Prozessor 110 kann eingerichtet sein, um einen Abstand einer Person unter Verwendung der bereitgestellten Abstandsdaten zu ermitteln. Das heißt, der Prozessor 110 kann eingerichtet sein, um unter Verwendung der bereitgestellten Abstandsdaten den ersten Abstand der ersten Person und den zweiten Abstand der zweiten Person zu ermitteln. Gemäß verschiedenen Ausführungsformen ist der Prozessor 110 eingerichtet, um den ersten Abstand der ersten Person unter Verwendung der bereitgestellten Abstandsdaten und unter Verwendung des ermittelten ersten Augenabstandes zu ermitteln und um den zweiten Abstand der zweiten Person unter Verwendung der bereitgestellten Abstandsdaten und unter Verwendung des ermittelten zweiten Augenabstandes zu ermitteln.

Das erste Kriterium 410 und/oder das zweite Kriterium 412 können jeweils ein Abstandskriterium sein. Der Prozessor 110 kann eingerichtet sein, um das Selbstbedienungsterminal 100 unter Verwendung des ersten Kriteriums 410 und des zweiten Kriteriums 412 zu steuern.

Gemäß verschiedenen Ausführungsformen weist das erste Kriterium 410 ein erstes Gesichtserkennungskriterium und ein erstes Abstandskriterium auf und das zweite Kriterium 412 weist ein zweites Gesichtserkennungskriterium und ein zweites Abstandskriterium auf und der Prozessor 110 kann das Selbstbedienungsterminal 100 unter Verwendung des ersten Kriteriums 410 und des zweiten Kriteriums 412 steuern.

Der mindestens eine Prozessor 110 kann eingerichtet sein, um unter Verwendung des ersten Kriteriums 410 und des zweiten Kriteriums 412 einen Hinweis 414 zu ermitteln und optional auszugeben. Gemäß verschiedenen Ausführungsformen weist das Selbstbedienungsterminal 100 ferner eine Anzeigevorrichtung auf. Die Anzeigevorrichtung kann eingerichtet sein, um einem Benutzer des Selbstbedienungsterminals 100, zum Beispiel der ersten Person, Informationen bereitzustellen. Die Anzeigevorrichtung kann beispielsweise einen Bildschirm aufweisen und die Anzeigevorrichtung kann eingerichtet sein, um Informationen auf dem Bildschirm bereitzustellen, d.h. anzuzeigen. Der Prozessor 110 kann eingerichtet sein, um der Anzeigevorrichtung den Hinweis 414 bereitzustellen und die Anzeigevorrichtung kann eingerichtet sein, um unter Verwendung des Hinweises 414 Informationen bereitzustellen, zum Beispiel auf dem Bildschirm anzuzeigen. Die Bildgebungsvorrichtung 102 kann eine Videokamera zum Bereitstellen eines Videostreams aufweisen und die Anzeigevorrichtung kann eingerichtet sein, um den bereitgestellten Videostream auf dem Bildschirm anzuzeigen. Beispielsweise können der ermittelte erste Abstand der ersten Person und der ermittelte zweite Abstand der zweiten Person größer sein als ein erstes Abstandskriterium bzw. ein zweites Abstandskriterium und der Prozessor 110 kann eingerichtet sein, um zu ermitteln, dass weder die erste Person noch die zweite Person das Selbstbedienungsterminal 100 benutzen.

Beispielsweise kann der ermittelte erste Abstand der ersten Person kleiner sein als ein erstes Abstandskriterium und der ermittelte zweite Abstand der zweiten Person kleiner sein als ein zweites Abstandskriterium und ferner können das erste Gesichtserkennungskriterium und das zweite Gesichtserkennungskriterium nicht erfüllt sein, d.h., der Prozessor 110 ermittelt, dass die erste Person und die zweite Person vermummt bzw. maskiert sind. Der Prozessor 110 kann eingerichtet sein, um zu ermitteln, dass ein Sicherheitsverstoß vorliegen könnte und kann eingerichtet sein, um eine Information an einen Sicherheitsdienst und/oder die Polizei zu übermitteln.

Beispielsweise kann der ermittelte erste Abstand der ersten Person kleiner sein als ein erstes Abstandskriterium und der ermittelte zweite Abstand der zweiten Person kann kleiner sein als ein zweites Abstandskriterium, wobei der erste Abstand der ersten Person kleiner ist als der zweite Abstand der zweiten Person. In diesem Fall kann der Prozessor 110 beispielsweise ermitteln, dass die erste Person ein Benutzer des Selbstbedienungsterminals 100 ist und dass die zweite Person kein Benutzer des Selbstbedienungsterminals 100 ist. Der Prozessor 110 kann beispielsweise ermitteln, dass die zweite Person einen Diskretionsabstand nicht einhält. Ferner können das erste Gesichtserkennungskriterium und das zweite Gesichtserkennungskriterium erfüllt sein, d.h., der Prozessor 110 ermittelt, dass die erste Person und die zweite Person nicht vermummt sind. Der Prozessor 110 kann eingerichtet sein, um zu ermitteln, dass ein Sicherheitsverstoß vorliegen könnte. Das Selbstbedienungsterminal 100 kann ein Bankautomat sein und der Sicherheitsverstoß kann beispielsweise sein, dass die zweite Person, die nicht als Benutzer des Selbstbedienungsterminals 100 ermittelt wurde, versucht, die PIN (persönliche Identifikationsnummer) der ersten Person, die als Benutzer des Selbstbedienungsterminals 100 ermittelt wurde, auszuspähen. Der Prozessor 110 kann eingerichtet sein, um den Hinweis 414, dass ein Sicherheitsverstoß vorliegen könnte, an die Anzeigevorrichtung zu übermitteln und die Anzeigevorrichtung kann eingerichtet sein, um der ersten Person, d.h. dem Benutzer des Selbstbedienungsterminals 100, eine Information bereitzustellen. Die Anzeigevorrichtung kann eingerichtet sein, um der ersten Person das mindestens eine digitale Bild 404, das das Gesicht 406 der ersten Person und das Gesicht 408 der zweiten Person aufweist, bereitzustellen, zum Beispiel auf dem Bildschirm anzuzeigen. Der Prozessor 110 kann ferner eingerichtet sein, um der Anzeigevorrichtung den ersten Abstand der ersten Person und den zweiten Abstand der zweiten Person bereitzustellen. Die Anzeigevorrichtung kann eingerichtet sein, um das auf dem Bildschirm angezeigte erste Gesicht 406 der ersten Person als Benutzer zu markieren, zum Beispiel mit einem ersten farbigen Rahmen, wie beispielsweise einem grünen Rahmen darzustellen, und kann ferner eingerichtet sein, um das auf dem Bildschirm angezeigte zweite Gesicht 408 der zweiten Person als potentielle Bedrohung zu markieren, zum Beispiel mit einem zweiten farbigen Rahmen, wie beispielsweise einem blauen, gelben oder roten Rahmen, darzustellen, wobei eine jeweilige Markierung, wie beispielsweise ein blauer Rahmen oder ein roter Rahmen, in Abhängigkeit des ermittelten zweiten Abstandes der zweiten Person ausgewählt werden kann. Die Anzeigevorrichtung kann ferner eingerichtet sein, der ersten Person zusätzliche Informationen bereitzustellen, zum Beispiel in Textform, als Ton etc. Gemäß verschiedenen Ausführungsformen weist das Selbstbedienungsterminal 100 ferner eine Benutzerschnittstelle auf, wobei die Benutzerschnittstelle die Anzeigevorrichtung aufweisen kann und wobei die Benutzerschnittstelle ferner eine Eingabevorrichtung aufweisen kann. Die Eingabevorrichtung kann eingerichtet sein, um dem Benutzer des Selbstbedienungsterminals 100 eine Interaktion mit dem Selbstbedienungsterminal 100 zu ermöglichen. Die Eingabevorrichtung kann beispielsweise ein Tastenfeld, zum Beispiel eine Tastatur sein. Die Anzeigevorrichtung und die Eingabevorrichtung können als berührungsempfindlicher Bildschirm (Touchscreen) integriert sein. Die mittels der Anzeigevorrichtung bereitgestellten Informationen können der ersten Person ermöglichen, die potentielle Bedrohung mittels der Eingabevorrichtung zu verneinen. Das heißt, die erste Person kann mittels der Benutzerschnittstelle angeben, dass die zweite Person keine Bedrohung ist (die zweite Person kann zum Beispiel ein Freund, ein Partner oder ein Familienmitglied sein). Der Prozessor 110 kann eingerichtet sein, um eine Benutzung des Selbstbedienungsterminals 100 zu blockieren bis die erste Person, d.h. der Benutzer, die potentielle Bedrohung verneint hat.

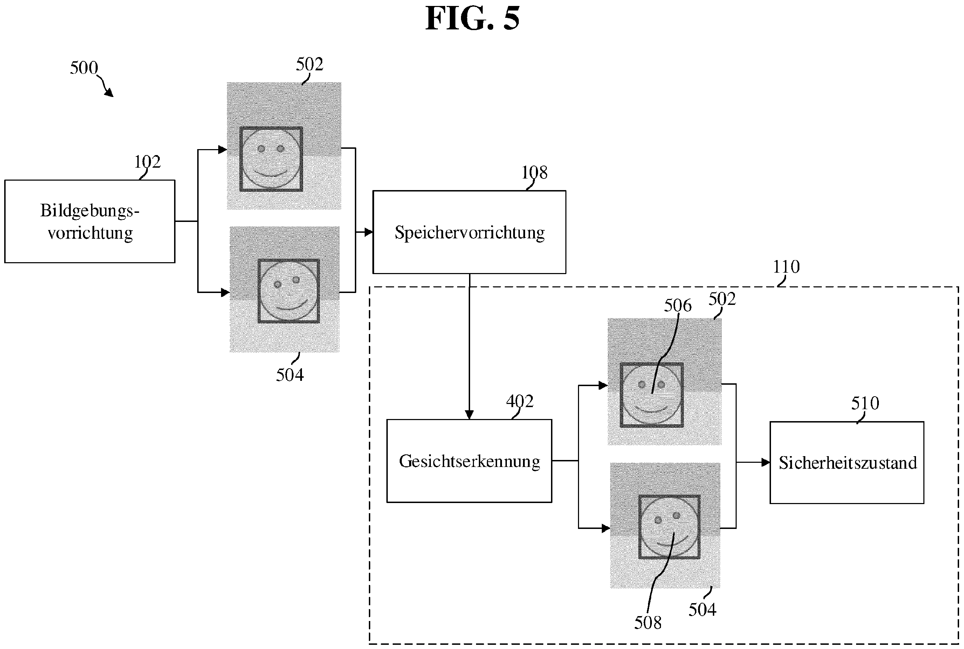

**FIG. 5** stellt ein Verarbeitungssystem 500 gemäß verschiedenen Ausführungsformen dar. Das Selbstbedienungsterminal 100 kann das Verarbeitungssystem 500 aufweisen. Das Verarbeitungssystem 500 kann die Bildgebungsvorrichtung 102 aufweisen. Die Bildgebungsvorrichtung 102 kann eingerichtet sein, um ein erstes digitales Bild 502 und ein zweites digitales Bild 504 bereitzustellen. Das zweite digitale Bild 504 kann zeitlich gesehen auf das erste digitale Bild 502 folgen. Anders ausgedrückt, kann das zweite digitale Bild 504 zeitlich nach dem ersten digitalen Bild 502 detektiert werden. Das erste digitale Bild 502 und das zweite digitale Bild 504 können während des Betreibens des Selbstbedienungsterminals 100 detektiert werden. Anders ausgedrückt können das erste digitale Bild 502 und das zweite digitale Bild 504 in einem Zeitfenster detektiert werden, das durch einen Startvorgang des Selbstbedienungsterminals 100 und einen Endvorgang des Selbstbedienungsterminals 100 gegeben ist. Das heißt, das Zeitfenster kann mit einem Startvorgang, wie beispielsweise einer Auswahl an einem Selbstbedienungskiosk oder einer PIN-Eingabe an einem Bankautomaten, beginnen und kann mit einem Endvorgang, wie beispielsweise dem Herausnehmen des Geldes aus einem Ausgabefach des Bankautomaten, enden.

Das Verarbeitungssystem 500 kann ferner die Speichervorrichtung 108 zum Speichern des ersten digitalen Bildes 502 und des zweiten digitalen Bildes 504 aufweisen. Das Verarbeitungssystem 500 kann den mindestens einen Prozessor 110 aufweisen. Der Prozessor 110 kann eingerichtet sein, um das erste digitale Bild 502 und das zweite digitale Bild 504 zu verarbeiten. Der Prozessor 110 kann eingerichtet sein, die Gesichtserkennung 402 durchzuführen. Das heißt, der Prozessor 110 kann eingerichtet sein, um zu ermitteln, ob das erste digitale Bild 502 und/oder das zweite digitale Bild 504 ein Gesicht einer Person aufweisen. Der Prozessor 110 kann eingerichtet sein, um, falls das erste digitale Bild 502 ein Gesicht einer Person aufweist, erste biometrische Merkmale des Gesichtes zu ermitteln bzw. zu extrahieren, und kann eingerichtet sein, um, falls das zweite digitale Bild 504 ein Gesicht einer Person aufweist, zweite biometrische Merkmale des Gesichtes zu ermitteln bzw. zu extrahieren. Der Prozessor 110 kann ferner eingerichtet sein, um, wie in Bezug auf FIG. 4 beschrieben, einen Abstand einer Person zu ermitteln. Das heißt, der Prozessor 110 kann eingerichtet sein, den Abstand der Person unter Verwendung des Augenabstandes der Person (zum Beispiel ermittelt unter Verwendung der biometrischen Daten) zu ermitteln und/oder das Selbstbedienungsterminal 100 kann mindestens einen Abstandssensor zum Bereitstellen von Abstandsdaten aufweisen und der Prozessor 110 kann eingerichtet sein den Abstand der Person unter Verwendung der Abstandsdaten zu ermitteln.

Beispielsweise kann der Prozessor 110 ermitteln, dass das erste digitale Bild 502 ein erstes Gesicht 506 einer ersten Person aufweist. Der Prozessor 110 kann ferner einen ersten Abstand der ersten Person ermitteln. Der Prozessor 110 kann eingerichtet sein, um die erste Person unter Verwendung des ermittelten ersten Gesichtes 506 der ersten Person und optional unter Verwendung des ersten Abstandes der ersten Person als Benutzer des Selbstbedienungsterminals zu ermitteln. Der Prozessor 110 kann beispielsweise ermitteln, dass das zweite digitale Bild 504 kein Gesicht einer Person aufweist und der Prozessor 110 kann eingerichtet sein, um das Selbstbedienungsterminal 100 derart zu steuern, dass das Selbstbedienungsterminal 100 in einen Sicherheitszustand 510 übergeht. Das Prozessor 110 kann eingerichtet sein, um das Selbstbedienungsterminal derart zu steuern, dass das Selbstbedienungsterminal 100 nach einem vordefinierten Zeitintervall (zum Beispiel nach 5 Sekunden, zum Beispiel nach 10 Sekunden, zum Beispiel nach mehr als 10 Sekunden) nach dem Detektieren des zweiten digitalen Bildes 504, das kein Gesicht einer Person aufweist, in einen Sicherheitszustand 510 übergeht. der Sicherheitszustand 510 kann auch der Standby-Zustand sein, falls das Selbstbedienungsterminal 100 zum Zeitpunkt des Detektierens des zweiten digitalen Bildes 504 in einem nichtkritischen Zustand ist (zum Beispiel in einem Zustand ist, in dem eine zweite Person keinen Schaden anrichten könnte).

Das Selbstbedienungsterminal 100 kann ein Bankautomat sein und zweite digitale Bild 504 kann detektiert werden zu einem Zeitpunkt, in dem das Geld-Ausgabefach geöffnet ist und Geld aufweist; der Sicherheitszustand 510 kann zum Beispiel aufweisen, dass das Geld-Ausgabefach geschlossen wird. Das Selbstbedienungsterminal kann die Benutzerschnittstelle aufweisen und der Prozessor 110 kann ferner eingerichtet sein, um eine Information bezüglich des Sicherheitszustandes 510 an die Anzeigevorrichtung der Benutzerschnittstelle zu übermitteln. Die Anzeigevorrichtung kann eingerichtet sein, um die Information bezüglich des Sicherheitszustandes 510 bereitzustellen, zum Beispiel auf einem Bildschirm anzuzeigen, zum Beispiel einen akustischen Hinweis, wie beispielsweise ein akustisches Signal, auszugeben. Anders ausgedrückt kann die Anzeigevorrichtung eingerichtet sein, um einen Benutzer auf den Sicherheitszustand 510, d.h. zum Beispiel auf das das Geld aufweisende geöffnete Geld-Ausgabefach, mittels einer Anzeige bzw. Ausgabe der Information auf einem Bildschirm und/oder mittels einer Ausgabe eines akustischen Hinweises hinzuweisen.

Beispielsweise kann der Prozessor 110 ermitteln, dass das erste digitale Bild 502 ein erstes Gesicht 506 einer ersten Person aufweist. Der Prozessor 110 kann ferner einen ersten Abstand der ersten Person ermitteln. Der Prozessor 110 kann eingerichtet sein, um die erste Person unter Verwendung des ermittelten ersten Gesichtes 506 der ersten Person und optional unter Verwendung des ersten Abstandes der ersten Person als Benutzer des Selbstbedienungsterminals zu ermitteln. Der Prozessor 110 kann eingerichtet sein, erste biometrische Merkmale des ersten Gesichtes 506 der ersten Person zu ermitteln bzw. aus dem ersten digitalen Bild 502 zu extrahieren. Der Prozessor 110 kann beispielsweise ermitteln, dass das zweite digitale Bild 504 ein zweites Gesicht 508 einer zweiten Person aufweist. Der Prozessor 110 kann eingerichtet sein, zweite biometrische Merkmale des zweiten Gesichtes 508 der zweiten Person zu ermitteln bzw. aus dem zweiten digitalen Bild 504 zu extrahieren. Der Prozessor 110 kann beispielsweise ermitteln, dass das zweite Gesicht 508 von dem ersten Gesicht 506 verschieden ist. Anders ausgedrückt können die ermittelten ersten biometrischen Merkmale von den ermittelten zweiten biometrischen Merkmalen verschieden sein. Der Prozessor 110 kann eingerichtet sein, um das Selbstbedienungsterminal 100 derart zu steuern, dass das Selbstbedienungsterminal 100 in den Sicherheitszustand 510 übergeht, falls dieser ermittelt, dass die ersten biometrischen Merkmale und die zweiten biometrischen Merkmale verschieden sind. Das heißt, das zweite digitale Bild 504 weist eine andere Person als das erste digitale Bild 502 auf. Das Selbstbedienungsterminal 100 kann ein Bankautomat sein und das zweite digitale Bild 504 kann detektiert werden zu einem Zeitpunkt, in dem das Geld-Ausgabefach geöffnet ist und Geld aufweist; der Sicherheitszustand 510 kann zum Beispiel aufweisen, dass das Geld-Ausgabefach geschlossen wird. Das Selbstbedienungsterminal 100 kann ein Bankautomat sein und das zweite digitale Bild 504 kann detektiert werden zu einem Zeitpunkt, in dem die PIN des Benutzers bereits eingegeben ist; der Sicherheitszustand 510 kann zum Beispiel aufweisen, dass das Selbstbedienungsterminal 100, d.h. der Bankautomat, blockiert wird, sodass kein Geld abgehoben werden kann. Zum Beispiel kann in diesem Fall zu einer erneuten PIN-Eingabe aufgefordert werden. Das Selbstbedienungsterminal 100 kann die Benutzerschnittstelle aufweisen und der Prozessor 110 kann ferner eingerichtet sein, um eine Information bezüglich des Sicherheitszustandes 510 an die Anzeigevorrichtung der Benutzerschnittstelle zu übermitteln. Die Anzeigevorrichtung kann eingerichtet sein, um die Information bezüglich des Sicherheitszustandes 510 bereitzustellen, zum Beispiel auf einem Bildschirm anzuzeigen.

Gemäß verschiedenen Ausführungsformen kann der mindestens eine Prozessor 110 des Selbstbedienungsterminals 100 eingerichtet sein, abhängig vom Ergebnis des auf das mindestens eine digitale Bild 104 bzw. das digitale Bild 404 angewendete Gesichtserkennungsverfahrens weiteres abnormales Verhalten, wie beispielsweise das Vorhandensein einer Vielzahl von Personen, das Vorhandensein von einer oder mehreren Personen ohne Benutzung des Selbstbedienungsterminals 100, sich schnell (d.h. schneller als ein vordefiniertes Geschwindigkeitskriterium) bewegende Personen etc., ermitteln und das Selbstbedienungsterminal 100 in Reaktion auf das ermittelte abnormale Verhalten steuern (zum Beispiel in einen Sicherheitszustand übergehen, zum Beispiel einen Sicherheitsdienst informieren etc.).

Der mindestens eine Prozessor 110 kann in einem oder mehreren (zum Beispiel jedem) des Verarbeitungssystems 300, des Verarbeitungssystems 400 und/oder des Verarbeitungssystem 500 eingerichtet sein, um mindestens ein in der Speichervorrichtung 108 gespeichertes digitales Bild (zum Beispiel jedes in der Speichervorrichtung 108 gespeicherte digitale Bild der mehreren digitalen Bilder) und/oder die unter Verwendung eines digitalen Bildes ermittelten biometrischen Merkmale (zum Beispiel die unter Verwendung des mindestens einen digitalen Bildes 104 ermittelten biometrischen Merkmale 206 des Gesichtes 202) nach Erfüllen eines Abschlusskriteriums zu löschen. Anders ausgedrückt kann der Prozessor 110 eingerichtet sein, um einen Befehl an die Speichervorrichtung 108 zu übermitteln, und die Speichervorrichtung 108 kann eingerichtet sein, um in Reaktion auf den Befehl das jeweilige digitale Bild bzw. die jeweiligen biometrischen Merkmale zu löschen. Das Abschlusskriterium kann einen Endvorgang des Betreibens des Selbstbedienungsterminals 100 definieren. Beispielsweise kann das Selbstbedienungsterminal 100 ein Bankautomat sein und das Abschlusskriterium kann das Herausnehmen des Geldes aus einem Ausgabefach sein. Beispielsweise kann das Selbstbedienungsterminal 100 eine Selbstbedienungskasse sein und das Abschlusskriterium kann der erfolgreiche Bezahlvorgang oder das Einpacken der Ware bzw. Waren sein.

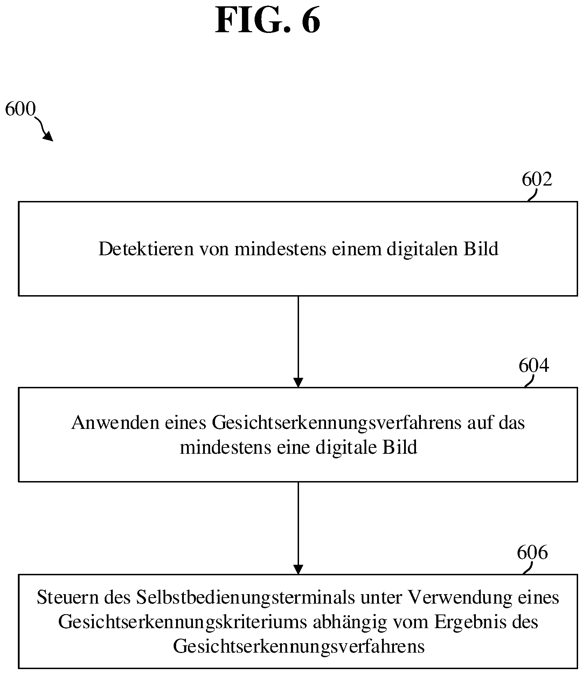

**FIG. 6** stellt ein Verfahren 600 zum Bereitstellen von Sicherheit an einem Selbstbedienungsterminal 100 gemäß verschiedenen Ausführungsformen dar. Das Verfahren 600 kann das Detektieren von mindestens einem digitalen Bild 104 aufweisen (in 602). Das Verfahren 600 kann ferner das Anwenden eines Gesichtserkennungsverfahrens auf das mindestens eine digitale Bild 104 aufweisen (in 604). Das Gesichtserkennungsverfahren kann aufweisen: Ermitteln, ob das mindestens eine digitale Bild 104 ein Gesicht einer Person aufweist. Das Gesichtserkennungsverfahren kann ferner aufweisen: falls das mindestens eine digitale Bild 104 das Gesicht 202 der Person zeigt, Extrahieren von biometrischen Merkmalen 206 des Gesichtes 202. Das Verfahren 600 kann ferner aufweisen: Steuern des Selbstbedienungsterminals 100 unter Verwendung eines Gesichtserkennungskriteriums abhängig vom Ergebnis des Gesichtserkennungsverfahrens (in 606). Das Gesichtserkennungskriterium kann aufweisen, ob ein Gesicht einer Person erkannt wurde oder ob kein Gesicht erkannt wurde. Das Gesichtserkennungskriterium kann von den extrahierten biometrischen Merkmalen 206 des Gesichtes 202 abhängig sein. Das Gesichtserkennungskriterium kann zum Beispiel aufweisen, ob die extrahierten biometrischen Merkmale 206 ein Merkmalskriterium 302 erfüllen oder nicht erfüllen, wobei das Gesicht 202 verdeckt sein kann, wenn das Merkmalskriterium 302 nicht erfüllt ist und wobei das Gesicht 202 nicht verdeckt sein kann, wenn das Merkmalskriterium erfüllt ist. Das Selbstbedienungsterminal 100 kann derart gesteuert werden, dass das Selbstbedienungsterminal 100 aus einem Standby-Zustand aktiviert wird, falls das Gesicht 202 nicht verdeckt ist. Das Selbstbedienungsterminal 100 kann derart gesteuert werden, dass das Selbstbedienungsterminal 100 einen Standby-Zustand beibehält, falls das Gesicht 202 verdeckt ist.

Das Gesichtserkennungsverfahren kann ermitteln, dass das digitale Bild 404 ein erstes Gesicht 406 einer ersten Person und ein zweites Gesicht 408 einer zweiten Person aufweist und das Verfahren 600 kann das Steuern des Selbstbedienungsterminals 100 unter Verwendung eines ersten Kriteriums 410 und eines zweiten Kriteriums 412 aufweisen, wobei das erste Kriterium 410 dem ersten Gesicht 406 der ersten Person und das zweite Kriterium 412 dem zweiten Gesicht 408 der zweiten Person zugeordnet sein kann. Das Steuern des Selbstbedienungsterminals 100 kann das Bereitstellen des mindestens einen digitalen Bildes 104, 404 an die erste Person und/oder die zweite Person aufweisen, zum Beispiel das Anzeigen des mindestens einen digitalen Bildes 104, 404 auf einem Bildschirm des Selbstbedienungsterminals 100. Das Verfahren 600 kann das Detektieren eines ersten digitalen Bildes 502 und eines zweiten digitalen Bildes 504 aufweisen (optional in 602). Das zweite digitale Bild 504 kann zeitlich gesehen auf das erste digitale Bild 502 folgen (d.h. zu einem späteren Zeitpunkt detektiert werden). Das Verfahren 600 kann das Anwenden des Gesichtserkennungsverfahrens auf das erste digitale Bild 502 und das zweite digitale Bild 504 aufweisen (optional in 604). Das Gesichtserkennungsverfahren kann ermitteln, dass das erste digitale Bild 502 ein erstes Gesicht 506 einer ersten Person aufweist und dass das zweite digitale Bild 504 das erste Gesicht 506 nicht aufweist. Das Verfahren 600 kann das Steuern des Selbstbedienungsterminals 100 abhängig vom Ergebnis des Gesichtserkennungsverfahrens aufweisen (optional in 606). Das Verfahren 600 kann aufweisen: Steuern des Selbstbedienungsterminals 100 derart, dass das Selbstbedienungsterminal 100 in einen Sicherheitszustand übergeht, falls das erste digitale Bild 502 das erste Gesicht 506 der ersten Person aufweist und falls das zweite digitale Bild 504 das erste Gesicht 506 nicht aufweist.

## Patentansprüche

1. Selbstbedienungsterminal (100), aufweisend:
• eine Bildgebungsvorrichtung (102), eingerichtet zum Bereitstellen von mindestens einem digitalen Bild (104) ;
• mindestens einen Prozessor (110), eingerichtet zum
∘ Anwenden eines Gesichtserkennungsverfahrens auf das mindestens eine digitale Bild (104); und
∘ Steuern des Selbstbedienungsterminals (100) unter Verwendung eines Gesichtserkennungskriteriums abhängig vom Ergebnis des Gesichtserkennungsverfahrens.

2. Selbstbedienungsterminal (100) nach Anspruch 1, wobei das Gesichtserkennungsverfahren aufweist:
• Ermitteln, ob das mindestens eine digitale Bild (104) ein Gesicht einer ersten Person aufweist; und
• falls das mindestens eine digitale Bild (104) das Gesicht der ersten Person aufweist, Extrahieren von biometrischen Merkmalen des Gesichtes.

3. Selbstbedienungsterminal (100) nach Anspruch 2, wobei, falls das mindestens eine digitale Bild (104) das Gesicht der ersten Person aufweist, das Gesichtserkennungskriterium aufweist, ob das Gesicht verdeckt ist und wobei optional das Gesicht verdeckt ist, falls mindestens ein biometrisches Merkmal der biometrischen Merkmale einem Merkmalskriterium nicht genügt.

4. Selbstbedienungsterminal (100) nach Anspruch 3, wobei der mindestens eine Prozessor (110) eingerichtet ist zum Steuern des Selbstbedienungsterminals (100) derart, dass das Selbstbedienungsterminal (100) aus einem Standby-Zustand aktiviert wird, falls das Gesicht nicht verdeckt ist.

5. Selbstbedienungsterminal (100) nach Anspruch 3 oder 4, wobei der mindestens eine Prozessor (110) eingerichtet ist zum Steuern des Selbstbedienungsterminals (100) derart, dass das Selbstbedienungsterminal (100) einen Standby-Zustand beibehält, falls das Gesicht verdeckt ist, wobei optional das Selbstbedienungsterminal (100) ferner eine Anzeigevorrichtung aufweist, die eingerichtet ist, um der dem Gesicht zugeordneten Person eine Information, dass das Gesicht verdeckt ist, bereitzustellen.

6. Selbstbedienungsterminal (100) nach einem der Ansprüche 1 bis 5, wobei das Gesichtserkennungsverfahren ermittelt, dass das mindestens eine digitale Bild (104) ein erstes Gesicht einer ersten Person und ferner ein zweites Gesicht einer zweiten Person aufweist und wobei der Prozessor (110) eingerichtet ist zum Steuern des Selbstbedienungsterminals (100) unter Verwendung eines ersten Kriteriums und eines zweiten Kriteriums abhängig vom Ergebnis des Gesichtserkennungsverfahrens, wobei das erste Kriterium der ersten Person zugeordnet ist und wobei das zweite Kriterium der zweiten Person zugeordnet ist.

7. Selbstbedienungsterminal (100) nach Anspruch 6, ferner aufweisend: eine Anzeigevorrichtung, eingerichtet zum Bereitstellen des mindestens einen digitalen Bildes (104), das das erste Gesicht der ersten Person und das zweite Gesicht der zweiten Person zeigt, an die erste Person und wobei optional der der mindestens eine Prozessor (110) ferner eingerichtet ist zum:
• Ermitteln eines ersten Abstandes der ersten Person zu dem Selbstbedienungsterminal (100);
• Ermitteln eines zweiten Abstandes der zweiten Person zu dem Selbstbedienungsterminal (100); und
wobei die Anzeigevorrichtung optional ferner eingerichtet ist zum Bereitstellen einer Abstandsinformation an die erste Person unter Verwendung des ersten Abstandes der ersten Person und des zweiten Abstandes der zweiten Person.

8. Selbstbedienungsterminal (100) nach Anspruch 7, wobei der mindestens eine Prozessor (110) eingerichtet ist, den ersten Abstand und/oder den zweiten Abstand unter Verwendung des mindestens einen digitalen Bildes (104) und einem detektierten Augenabstand der ersten Person bzw. der zweiten Person zu ermitteln.

9. Selbstbedienungsterminal (100) nach Anspruch 7, ferner aufweisend mindestens einen Abstandssensor, eingerichtet zum Detektieren eines Abstandes einer Person, wobei der mindestens eine Prozessor (110) den ersten Abstand und/oder den zweiten Abstand unter Verwendung des detektieren Abstandes ermittelt.

10. Selbstbedienungsterminal (100) nach einem der Ansprüche 1 bis 9,
wobei die Bildgebungsvorrichtung (102) eingerichtet ist, um ein erstes digitales Bild und ein zweites digitales Bild bereitzustellen, wobei das zweite digitale Bild zeitlich auf das erste digitale Bild folgt,
wobei das Gesichtserkennungsverfahren ermittelt, dass das erste digitale Bild ein erstes Gesicht einer ersten Person aufweist und dass das zweite digitale Bild das erste Gesicht der ersten Person nicht aufweist; und wobei der mindestens eine Prozessor (110) eingerichtet ist zum Steuern des Selbstbedienungsterminals (100) derart, dass das Selbstbedienungsterminal (100) in einen Sicherheitszustand übergeht.

11. Selbstbedienungsterminal (100) nach einem der Ansprüche 1 bis 10, ferner aufweisend: eine Speichervorrichtung (108), eingerichtet zum Speichern des mindestens einen digitalen Bildes (104), wobei die Speichervorrichtung (108) optional ferner eingerichtet ist, das mindestens eine digitale Bild (104) nach Erfüllen eines Abschlusskriteriums zu löschen.

12. Verfahren zum Bereitstellen von Sicherheit an einem Selbstbedienungsterminal (100), aufweisend:
• Detektieren von mindestens einem digitalen Bild (104) ;
• Anwenden eines Gesichtserkennungsverfahrens auf das mindestens eine digitale Bild (104); und
• Steuern des Selbstbedienungsterminals (100) unter Verwendung eines Gesichtserkennungskriteriums abhängig vom Ergebnis des Gesichtserkennungsverfahrens.

13. Verfahren nach Anspruch 12, wobei das
Gesichtserkennungsverfahren aufweist:
• Ermitteln, ob das mindestens eine digitale Bild (104) ein Gesicht einer ersten Person aufweist; und
• falls das mindestens eine digitale Bild (104) das Gesicht der ersten Person aufweist, Extrahieren von biometrischen Merkmalen des Gesichtes.

14. Verfahren nach Anspruch 13, wobei, falls das mindestens eine digitale Bild (104) das Gesicht der ersten Person aufweist, das Gesichtserkennungskriterium aufweist, ob das Gesicht verdeckt ist und wobei optional das Steuern des Selbstbedienungsterminals (100) aufweist: Steuern des Selbstbedienungsterminals (100) derart, dass das Selbstbedienungsterminal (100) aus einem Standby-Zustand aktiviert wird, falls das Gesicht nicht verdeckt ist, und wobei ferner optional das Steuern des Selbstbedienungsterminals (100) aufweist: Steuern des Selbstbedienungsterminals (100) derart, dass das Selbstbedienungsterminal (100) einen Standby-Zustand beibehält, falls das Gesicht verdeckt ist.

15. Verfahren nach einem der Ansprüche 12 bis 14, wobei das Gesichtserkennungsverfahren ermittelt, dass das mindestens eine digitale Bild (104) ein erstes Gesicht einer ersten Person und ferner ein zweites Gesicht einer zweiten Person aufweist und wobei das Steuern des Selbstbedienungsterminals (100) aufweist: Steuern des Selbstbedienungsterminals (100) unter Verwendung eines ersten Kriteriums und eines zweiten Kriteriums abhängig vom Ergebnis des Gesichtserkennungsverfahrens, wobei das erste Kriterium der ersten Person zugeordnet ist und wobei das zweite Kriterium der zweiten Person zugeordnet ist.
